(19) Europäisches Patentamt
European Patent Office
Office européen des brevets

(11) Publication number: **0 012 913**
**B1**

(12) **EUROPEAN PATENT SPECIFICATION**

(45) Date of publication of patent specification: **20.04.83**

(51) Int. Cl.³: **G 11 B 5/42**, G 11 B 5/22, G 11 B 5/12

(21) Application number: **79105064.4**

(22) Date of filing: **10.12.79**

(54) **A method of making a thin film magnetic head and a head so made.**

(30) Priority: **21.12.78 US 972102**

(43) Date of publication of application:
**09.07.80 Bulletin 80/14**

(45) Publication of the grant of the patent:
**20.04.83 Bulletin 83/16**

(84) Designated Contracting States:
**DE FR GB IT**

(56) References cited:
**US - A - 4 085 430**

(73) Proprietor: **International Business Machines Corporation**
**Armonk, N.Y. 10504 (US)**

(72) Inventor: **Jones, Jr., Robert Edward**
**6776 Hampton Drive**
**San Jose, California 95120 (US)**

(74) Representative: **Grant, Iain Murray**
**IBM United Kingdom Patent Operations Hursley Park**
**Winchester Hants, SO21 2JN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 012 913 B1**

# A method of making a thin film magnetic head and a head so made

This invention relates to a method of making a thin film magnetic head for use with magnetic recording media and to the resulting head structure.

One of the problems associated with thin film inductive heads arises from the need to deposit a second magnetic pole piece relative to a first magnetic pole piece previously deposited onto a substrate. According to the prior art, the width of the two pole pieces are made substantially equal, then width variation and any misregistration during the manufacturing processes of the transducer will produce an overhang condition called "wraparound". Misregistration which may lead to a wraparound condition may be caused by operator error, defective masks, or non-ideal alignment tools, among other things. At the edges of the pole pieces where the overhang or wraparound occurs, the flux lines of the magnetic field produced between the two pole pieces will not be in the desired direction relative to the data track on a magnetic recording medium. Thus, during a write operation, the recording medium will not be properly magnetized at the area proximate to the wraparound, in a direction parallel to the direction of motion of the medium, but in a direction at an angle to the magnetic transitions developed by the pole pieces. This improper magnetization will not provide a significant readout signal during the read mode, particularly if the head is slightly misaligned during the read operation. In effect, the pole pieces cannot create or sense the magnetic transitions properly in the wraparound region of the pole pieces.

In extreme cases, particularly when the transducing gap between the pole pieces is specified to be very small, the adjacent pole pieces can magnetically short in the wraparound region, so that a proper magnetic field cannot be produced between the pole pieces. Sputtering techniques which are generally used to deposit the gap material typically leave the top corners of the first pole piece layer uncovered or with a relatively thin covering, particularly when the gap between the pole pieces is very small.

The present invention provides a method of making thin film magnetic heads comprising depositing sequentially upon a non-magnetic substrate a layer to form a first pole piece layer, a layer of non-magnetic material to form a transducing gap and a layer of magnetic material to form a second pole piece layer characterized in that the shaping means, defining the intended or nominal width of the first pole piece layer, is adjusted, or replaced by another means, for the formation of the second pole piece layer to define a lesser intended or nominal width thereof, in response to determined process variations, sufficient to reduce, to minimal proportions, the risk of the second layer laterally overhanging the first layer whereby the method can be used, without producing an impractical percentage of wasters, for bulk production of transducers which will substitute adequately for the conventional transducer in which the pole pieces are of the same width and are acccurately registered and the pole piece width is that of the second layer of the substitute.

In an embodiment of this invention, a thin film magnetic transducer has two pole pieces that form a magnetic circuit. A first pole piece of predetermined dimensions, i.e., width, thickness and throat height, is deposited on a non-magnetic substrate. After deposition of the transducer gap material, insulation, and electrical coil structure, a second pole piece having a specified width less than that of the first pole piece is deposited. The width of the second pole piece is determinative of the effective width of the data track recorded on a recording medium.

The nominal widths of the first and second pole pieces are relatively adjusted taking statistical account the variations, that may occur in manufacture, in the widths of the pole piece layers and misregistration of one pole piece relative to the other so that the second pole piece overlies the first pole piece without overhang. In other words the problem of "wraparound" does not occur.

The invention will be described, by way of example, with reference to the accompanying drawing in which:

Figure 1 is a sectional view of two magnetic pole pieces representing the wraparound condition found in prior art thin film head structures;

Figure 2 is a sectional view of a basic thin film magnetic head structure, cut away through the centre, illustrating the relationship of the two magnetic pole pieces embodying the present invention; and

Figure 3 is a sectional view of the two magnetic pole pieces depicted in Figure 2, showing the relationship of the widths of the pole pieces.

It should be noted that some dimensions, such as thicknesses, of the several layers illustrated in Figures 2 and 3 are not necessarily to scale.

Figure 1 illustrates a prior art relationship of pole pieces P1 and P2 having a wraparound condition with pole piece P2 overhanging pole piece P1. This arrangement suffers from the aforementioned problems of improper magnetization during writing and decreased signal on reading, and is subject to shorting and other deleterious effects.

Figure 2 illustrates an embodiment of the invention, showing a thin film magnetic head, which includes a pole piece layer P1, that is deposited on a non-magnetic substrate 10. The substrate has been prepared by polishing and cleaning to afford a good adhesion surface for

the pole piece layer P1. The substrate also provides an air bearing surface 11 which affords flying the transducer assembly over a rotating magnetic disk. The pole piece layer P1 is preferably made of a nickel-iron material, generally known as Permalloy. The P1 layer is formed of a uniform specified thickness, in the range of 2 to 3 microns. During deposition, the thickness is controlled to be within 10% of the specified thickness. The width of the P1 pole piece layer is formed to be in the range of 25 to 200 microns.

After deposition of the first pole piece layer P1, an insulating layer 12 and coil structure including an electrical conductor pattern represented by blocks 14 are formed over the layer P1. Subsequently, a second pole piece layer P2 of Permalloy is deposited. The P2 pole piece layer is spaced from the P1 pole piece layer by the thickness of the insulating layer 12, which may have a thickness of about one micron at the effective gap area along the air bearing surface 11 of the substrate 10. The major portion of the P2 pole piece layer is disposed substantially parallel to the P1 pole piece layer. This desired parallelism is realized by controlling the uniformity of thickness of the layers being deposited.

The widths of the pole piece layers P1 and P2 are selected taking into consideration the variations which may occur during fabrication in the widths of the pole piece layers (designated as P1W and P2W respectively). To ensure that wraparound will occur with a frequency less than 1.5 parts per 1000 fabricated, the mean width dimensions of the pole piece layers P1 and P2 obey the relationship:

$$\frac{\overline{P1W}-\overline{PW2}}{2} \geq \left[\left(\frac{3\sigma(P1W)}{2}\right)^2 + \left(\frac{3\sigma(P2W)}{2}\right)^2 + \left(3\sigma(MR)\right)^2\right]^{1/2}$$

where $3\sigma$ is the three sigma variation, i.e., three standard deviations from the norm, and MR is the amount of misregistration as measured between the centre lines bisecting each pole piece.

Furthermore, the width of the P1 pole piece should not be so large when compared to the centreline to centreline spacing of tracks to as to experience fringing effects or the readout of data from adjacent tracks.

As an example of width selection, the pole piece layer P1 has a width of approximately 40 microns whilst pole piece layer P2 has a width of approximately 35 microns. In more general terms, the width of pole piece layer P2 may be up to 15% less than the width of pole piece layer P1.

The P1 and P2 pole pieces enclose the transducing gap formed by the insulating layer 12. The effective transducing portion of the non-magnetic gap is located at the air bearing surface 11 of the substrate 10, which surface flies over a record medium such as a rotating magnetic disk (not shown).

As illustrated in Figure 3, the P1 and P2 pole piece layers are ideally centred relative to the centreline CL which bisects the layers. However, the P2 pole piece layer may be displaced from the centreline relative to the extremities of the P1 pole piece, due to misregistration during manufacture, but overhang of P2 or "wraparound" is avoided.

In each of the deposition processes, a patterned mask is employed that delineates the location and predetermines the configurations of the layer, including width dimensions. The thicknesses of the layers are controlled by the deposition process, which may be chemical etching, sputter etching or plating, as is known in the art. By means of the mask design and the deposition process, control of the configuration of each layer is possible, so that proper spacing, parallelism, thicknesses and widths of the pole piece layers are suitably achieved.

By virtue of the lesser width of the P2 pole piece layer, which may be is up to 15% less in width than that of the P1 pole piece layer, overhang layer P2 or "wraparound" problems are avoided.

It should be understood that the invention is not limited to the specific dimensions or materials designated above. Basically, the preferred widths of the pole pieces P1 and P2 should satisfy the relationship given herein.

When used for recording on a magnetic medium, the effective width of a data track recorded is slightly greater than the width of the second pole piece layer P2 and is relatively independent of the width of the first pole piece layer P1.

## Claims

1. A method of making thin film magnetic heads comprising depositing sequentially upon a non-magnetic substrate (10) a layer to form a first pole piece layer (P1), a layer of non-magnetic material (12) to form a transducing gap and a layer of magnetic material to form a second pole piece layer (P2) characterized in that the shaping means defining the intended or nominal width of the first pole piece layer (P1), is adjusted, or replaced by another means for the formation of the second pole piece layer (P2) to define a lesser intended or nominal width thereof, in response to determined process variations, sufficient to reduce, to minimal proportions, the risk of the second layer laterally overhanging the first layer whereby the method can be used, without producing an impractical percentage of wasters, for bulk production of transducers which will substitute

adequately for the conventional transducer in which the pole pieces are of the same width and are accurately registered and the pole piece width is that of the second layer (P2) of the substitute.

2. A method as claimed in claim 1, characterised in that the nominal width of the second pole piece layer (P2) is up to 15% less than the nominal width of the first pole piece layer (P1).

3. A method as claimed in claim 1 or claim 2, characterised in that the width of the first pole piece layer (P1) is approximately 40 microns and the width of the second pole piece layer (P2) is approximately 35 microns.

4. A method as claimed in any one of the preceding claims characterised in that the thicknesses of the first and second pole piece layers (P1, P2) are substantially equal.

5. A method as claimed in claim 4, characterised in that the thicknesses of the first and second pole piece layers (P1, P2) are between 2 and 3 microns.

6. A method as claimed in any one of the preceding claims characterised in that the transducing gap layer (12) has a thickness of approximately 1 micron.

**Revendications**

1. Procédé de fabrication de têtes magnétiques à films minces consistant à déposer de façon séquentielle sur un substrat non magnétique (10) une couche constituant une première pièce polaire (P1), une couche d'un matériau non magnétique (12) formant un entrefer de transduction, et une couche d'un matériau magnétique destinée à former une seconde pièce polaire (P2), caractérisé en ce que le mécanisme de mise en forme, qui définit la largeur désirée ou nominale de la couche constituant la première pièce polaire (P1), est réglé, ou remplacé par un autre mécanisme, pour les besoins de la formation de la couche constituant la seconde pièce polaire (P2), de manière à définir une largeur désirée ou nominale de celle-ci qui est inférieure à celle de la première pièce polaire, en réponse à des variations déterminées du processus de fabrication et ce de façon suffisante pour réduire au minimum le risque de dépassement latéral, par la seconde couche, des bords de la première, ledit procédé pouvant de ce fait être employé, sans produire un pourcentage excessif de rejets, aux fins de la fabrication de masse de transducteurs qui remplaceront avantageusement les transducteurs classiques dans lesquels les pièces polaires presentent une même largeur et sont alignées avec précision l'une par rapport à l'autre, et dans lesquels la largeur de chaque pièce polaire correspond à celle de la seconde couche (P2) des transducteurs qui leurs seront substitués.

2. Procédé selon la revendication 1, caractérisé en ce que la largeur nominale de la couche constituant la seconde pièce polaire (P2) est inférieure de 15% au maximum à celle de la couche constituant la première pièce polaire (P1).

3. Procédé selon la revendication 1 ou 2, caractérisé en ce que la largeur de la couche constituant la première pièce polaire (P1) est d'environ 40 microns et en ce que celle de la couche constituant la seconde pièce polaire (P2) est d'environ 35 microns.

4. Procédé selon l'une quelconque des revendications précédentes, caractérisé en ce que les épaisseurs des couches constituant les première et second pièces polaires (P1, P1) sont pratiquement égales.

5. Procédé selon la revendication 4, caractérisé en ce que les épaisseurs des couches constituant les première et second pièces polaires (P1, P2) sont comprises entre 2 et 3 microns.

6. Procédé selon l'une quelconque des revendications précédentes, caractérisé en ce que la couche constituant l'entrefer de transduction (12) présente une épaisseur d'environ 1 micron.

**Patentansprüche**

1. Verfahren zur Herstellung eines Dünnschicht-Magnetkopfes durch sequentielle Aufbringung einer Schicht auf einem nichtmagnetischen Substrat (10), um eine erste Polstückschicht (P1) zu bilden, einer Schicht aus nichtmagnetischem Material (12), um den Übertragerspalt zu bilden und einer Schicht aus magnetischem Material, um eine zweite Polstückschicht (P2) zu bilden, dadurch gekennzeichnet, daß der Formgebungsmechanismus, welcher die beabsichtigte oder nominale Breite der ersten Polstückschicht (P1) definiert, angepaßt wird oder ersetzt wird durch einen anderen Mechanismus, um die zweite Polstückschicht (P2) zu bilden in geringeren beabsichtigter bzw. nominaler Breite, in Abhängigkeit von vorherbestimmten Prozeßveränderungen, die ausreichen, um auf kleinen Bereichen das Risiko auszuschalten, daß die zweite Schicht seitlich über die erste Schicht überhängt, wobei das Verfahren ohne Produzierung eines unpraktischen Prozentsatzes von Ausschusses für die Massenproduktion von Übertragern benutzt werden kann, die adäquat konventionelle Übertrager ersetzen, in denen die Polstücke von selber Breite und genau ausgerichtet sind, wobei hier die Polstückbreite diejenige der zweiten Schicht (P2) des Substituenten ist.

2. Verfahren gemäß Anspruch 1, dadurch gekennzeichnet, daß die nominale Breite der zweiten Polstückschicht (P2) bis zu 15% geringer als die nominale Breite der ersten Polstückschicht (P1) ist.

3. Verfahren gemäß Anspruch 1 oder 2, dadurch gekennzeichnet, daß die Breite der ersten Polstückschicht (P1) etwa 40 Mikron und die Breite der zweiten Polstückschicht (P2) ungefähr 35 Mikron beträgt.

4. Verfahren nach einem der vorhergehenden Ansprüche, dadurch gekennzeichnet, daß die Dicken der ersten und zweiten Polstückschichten (P1, P2) im wesentlichen gleich sind.

5. Verfahren gemäß Anspruch 4, dadurch gekennzeichnet, daß die Dicken der ersten und zweiten Polstückschichten (P1, P2) zwischen 2 und 3 Mikron betragen.

6. Verfahren gemäß einem der vorhergehenden Ansprüche, dadurch gekennzeichnet, daß die Schicht (12), die den Übertragerspalt bildet, eine Dicke von etwa 1 Mikron aufweist.

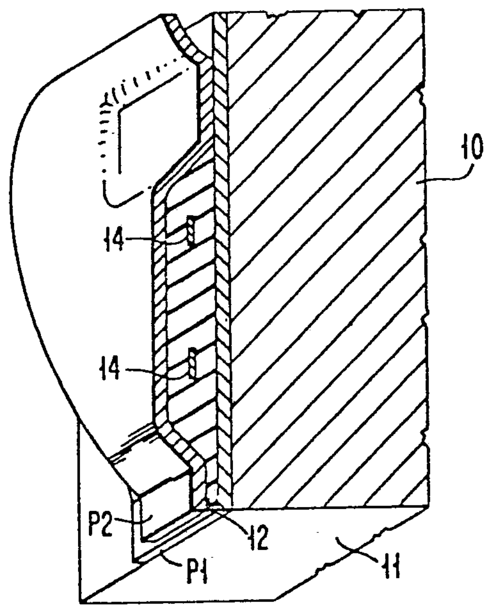


FIG. 2

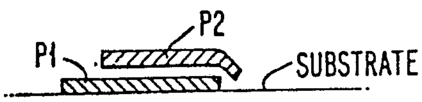


PRIOR ART

FIG. 1

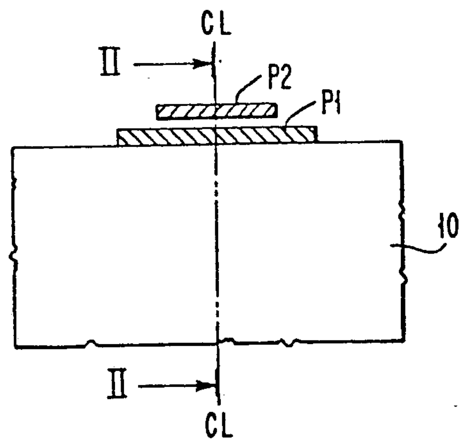


FIG. 3